# EUROPÄISCHE PATENTSCHRIFT

(11) **EP 0 394 640 B1**
(45) Veröffentlichungstag und Bekanntmachung des Hinweises auf die Patenterteilung: **19.05.1993**
(21) Anmeldenummer: 90103631.9
(22) Anmeldetag: 24.02.1990
(51) Int. Cl.: C03B 17/04, C03B 23/047, C03B 5/12, C03B 5/02

(54) **Verfahren zur Herstellung von Rohren aus Quarzglas oder hochkieselsäurehaltigen Gläsern mit geringen Durchmesserschwankungen**
Method for making silica tubes or tubes with a high content of silicic acid with low diameter variation
Procédé de fabrication de tubes en verre de quartz ou en verres à haute teneur acide silicique avec des variations de diamètre faible

(30) Priorität: 27.04.1989 DE 3913875
(43) Veröffentlichungstag der Anmeldung: 31.10.1990
(73) Patentinhaber: Heraeus Quarzglas GmbH, D-63405 Hanau (DE)
(72) Erfinder: Leber, Helmut, Dr., D-6450 Hanau 1 (DE); Whippey, Nigel R., D-6453 Seligenstadt (DE)
(74) Vertreter: Heinen, Gerhard, Dr.

(56) Entgegenhaltungen:
- WO-A-82/03070
- DE-A- 1 945 576
- DE-A- 2 647 154
- DE-B- 1 221 771
- DE-C- 506 384
- GB-A- 1 066 102

## Beschreibung

Die Erfindung bezieht sich auf ein Verfahren zum Herstellen von Rohren aus glasigem Werkstoff im Vertikalzug, bei dem auf Erweichungstemperatur erhitztes Ausgangsmaterial einem ortsfesten Verformungsbereich zugeführt, verformt und nach unten abgezogen wird, wobei im Verformungsbereich eine Druckdifferenz zwischen einem höheren Druck im Rohrinneren und einem niedrigeren Druck in einer das Rohr umschließenden Kammer oder Heizraum aufrechterhalten und wobei das Rohrinnere auf der Zuführseite des Ausgangsmaterials gasdicht abgeschlossen wird.

Verfahren der vorstehend charakterisierten Art sind aus der DE-B-12 21 771 bekannt. Bei diesen Verfahren wird ein Glasrohr aus einer Glasschmelze über einen Dorn kontinuierlich senkrecht nach unten abgezogen, wobei das schmelzflüssige Glasrohr durch eine unterhalb des Dornes angeordnete, langgestreckte Hülse geführt wird. Im Zwischenraum zwischen dem Glasrohr und der Hülse wird dabei ein Unterdruck gegenüber dem im Rohrinneren herrschenden Atmosphärendruck erzeugt und dadurch das abkühlende Glasrohr an die Innenwandung der Hülse gedehnt. Dieses Verfahren minimiert Schwankungen des Glasrohr-Außendurchmessers; Schwankungen des Glasrohr-Innendurchmessers und daraus resultierende Änderungen der Wandstärke des Glasrohres lassen sich aber dadurch nicht vermeiden.

Weiterhin sind aus der DE-PS-671 626 Verfahren bekannt, bei denen in einem elektrisch beheizten Ofen, der aus einem Schmelzbehälter mit ihn mit geringem Abstand umschließenden, elektrisch beheizten Mantel besteht, Quarzkörnung auf Erweichungstemperatur erhitzt und durch eine Ringdüse nach unten in Rohrform abgezogen wird. Das Rohr wird dabei in der Verformungszone sowohl außen als auch innen von einem Schutzgas bespült. Nachdem eine gewünschte Rohrlänge gezogen ist, wird das Rohr abgeschnitten. Die so hergestellten Rohre aus Quarzglas zeichnen sich durch eine gleichmäßige Wandstärke aus, sie sind frei von Blasen und glasklar. Durchmesserschwankungen dieser Rohre sind jedoch nicht zu vermeiden.

Bei den heute für viele Verwendungszwecke von Quarzglasrohren automatisierten Verarbeitungsverfahren kommt es auf höchste Präzision und Einhaltung enger Toleranzen insbesondere hinsichtlich des Rohrdurchmessers an.

Demgemäß hat sich die Erfindung die Aufgabe gestellt, ein Verfahren zur Herstellung von Rohren beliebiger Länge aus Quarzglas oder hochkieselsäurehaltigen Gläsern - Gläser mit einem SiO₂-Gehalt von mindestens 95 Gewichts-% - bereitzustellen, die einen vorgegebenen Durchmesser und eine vorgegebene Wandstärke aufweisen, insbesondere einen über eine vorgegebene Rohrlänge vorgegebenen konstanten Durchmesser und konstante Wandstärke aufweisen, d. h. bei denen die Durchmesserschwankungen minimiert sind.

Gelöst wird diese Aufgabe für das eingangs charakterisierte Verfahren erfindungsgemäß dadurch, daß zum Herstellen von Rohren aus Quarzglas oder hochkieselsäurehaltigen Gläsern das Ausgangsmaterial in einem elektrisch beheizten Ofen erhitzt und von dort direkt dem Verformungsbereich zugeführt wird, daß das abgezogene Rohrende zur Erzeugung und Aufrechterhaltung des höheren Druckes im Rohrinneren mit einem festen, gasförmigen oder flüssigen Stopfen verschlossen wird, daß dem Rohrinneren im Verformungsbereich Gas zugeführt wird und daß die Drücke im Rohrinneren und in der Kammer oder in dem Heizraum kontinuierlich gemessen und auf konstante Druckdifferenz geregelt werden.

Die konstante Druckdifferenz wird vorteilhafterweise dadurch aufrechterhalten, daß der Kammer oder dem Heizraum Gas zugeführt wird. Bei Verwendung von hochschmelzenden Metallen wie Molybdän oder Wolfram als Werkstoff für die Heizelemente oder den Schmelztiegel hat sich für die Zufuhr von Gas wenigstens in die Kammer oder den Heizraum ein wasserstoffhaltiges Gas besonders bewährt.

Das erfindungsgemäße Verfahren eignet sich nicht nur für die Rohrherstellung aus körnigem Ausgangsmaterial, sondern auch für die Verwendung eines hohlzylindrischen Körpers als Ausgangsmaterial. Für den ersten Fall hat es sich bewährt, wie an sich aus der zum Stand der Technik genannten DE-PS 671 626 bekannt, dem Rohrinnern in dem Verformungsbereich Gas zuzuführen.Auch für den Fall der Verwendung eines hohlzylindrischen Ausgangskörpers wird zur Aufrechterhaltung eines Druckes im Rohrinneren ein Gas zugeführt, wobei es vorteilhaft ist, das dem Verformungsbereich abgekehrte Ende des hohlzylindrischen Körpers gasdicht zu verschließen. Das dem Rohrinneren zugeführte Gas muß dabei nicht notwendigerweise wasserstoffhaltig sein, es kann beispielsweise auch Stickstoff oder Luft verwendet werden.Bei Verwendung von Heizelementen aus Graphit ist die Spülung des Heizraumes mit einem wasserstoffhaltigem Gas nicht unbedingt erforderlich.

Besonders gute Ergebnisse bezüglich der Einhaltung enger Durchmessertoleranzen werden erfindungsgemäß dadurch erzielt, daß die Schwankungen der Druckdifferenz zwischen Rohrinnern und dem Druck in der Kammer oder im Heizraum auf maximal ± 1 Pa geregelt werden.

Mit Hilfe des erfindungsgemäßen Verfahrens ist es möglich, Quarzglasrohre von beispielsweise 25 mm Durchmesser und 3 mm Wandstärke herzustellen, deren Durchmesser über eine Länge von 2 m auf ± 0,05 mm konstant sind. Die Druckdifferenz im Verformungsbereich wurde dabei auf 190 ± 1 Pa konstant gehalten. Ohne die erfindungsgemäße Druckregelung treten erhebliche Schwankungen der Druckdifferenz im Verformungsbereich auf, die zu Durchmesserschwankungen bis zu 0,2 mm bei einer Rohrlänge von 2 m führen. Besonders vorteilhaft hat sich das erfindungsgemäße Verfahren bei der Herstellung von Quarzglasrohren großen Durchmessers, beispielsweise von 100 mm und größer, erwiesen. Hier konnten bei gleicher Rohrlänge von 2 m Durchmesserschwankungen auf maximal 0,3 mm begrenzt werden, während ohne das erfindungsgemäße Verfahren die Durchmesserschwankungen 2 mm und mehr bei gleicher Rohrlänge betragen.

In den Figuren 1 bis 3 sind Vorrichtungen zur Durchführung des erfindungsgemäßen Verfahrens schematisch dargestellt, wobei als Ausgangsmaterial für das herzustellende Quarzglasrohr in den Figuren 1 und 2 Quarzkörnung benutzt wird und in dem Ausführungsbeispiel nach Figur 3 ein Quarzhohlzylinder.

Alle drei in den Figuren 1 bis 3 dargestellten Anwendungsbeispielen zur Durchführung des erfindungsgemäßen Verfahrens liegt die gleiche Lehre zugrunde, daß im Verformungsbereich eine konstante Druckdifferenz zwischen dem Druck im Rohrinnern und dem Druck in einer das Rohr umschließenden mit Schutzgas gespeisten Kammer (Figuren 1 und 2) bzw. Heizraum (Figur 3) aufrechterhalten wird, wobei jeweils die Drücke im Rohrinnern und in der Kammer oder in dem Heizraum kontinuierlich gemessen und auf eine konstante Differenz geregelt werden. Das abgezogene Rohrende ist dabei zur Erzeugung und Aufrechterhaltung eines höheren Druckes im Rohrinnern als in der Kammer oder dem Heizraum verschlossen.

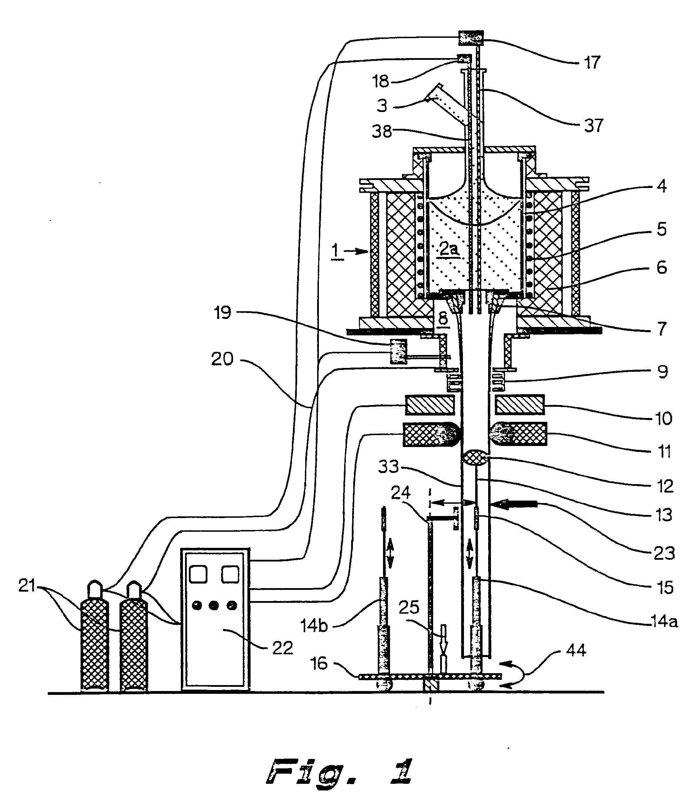

Aus Figur 1 ist ersichtlich, daß in dem Schmelzofen 1 Quarzkörnung 2a als Ausgangsmaterial verwendet wird, die über einen Einfüllstutzen 3 dem Schmelztiegel 4 zugeführt wird. Der Schmelztiegel 4 besteht, wie an sich bekannt, aus einem hochschmelzenden Metall, beispielsweise aus Molybdän. Der Schmelztiegel 4 wird mit Hilfe der elektrischen Heizelemente 5 beheizt auf eine Temperatur, so daß die Quarzkörnung geschmolzen wird. Die elektrischen Heizelemente 5 sind nach außen hin durch die thermische Isolation 6 abgeschlossen. Am unteren Ende des Schmelztiegels 4 befindet sich eine düsenförmige Austrittsöffnung 7, aus der das auf Erweichungstemperatur befindliche Quarzglas austreten kann. Die Form der düsenartigen Austrittsöffnung 7 bestimmt dabei die Geometrie des Quarzglasrohres 33. Die Austrittsöffnung ragt in den Kammerinnenraum 8, die nach unten, also in Abzugsrichtung des Quarzglasrohres 33, eine Auslaufschleuse 9 aufweist, die im Ausführungsbeispiel als Blendensystem ausgebildet ist. Durch die Auslaufschleuse 9 tritt das mittels der Ziehvorrichtung 11 abgezogene Quarzglasrohr aus dem Kammerinnern 8 aus. Zwischen der Ziehvorrichtung 11 und der Auslaufschleuse 9 ist eine Meßvorrichtung 10, die den Durchmesser des abgezogenen Quarzglasrohres 33 sowie seine Wandstärke erfaßt, angeordnet. Beispielsweise kann als solche Meßvorrichtung ein handelsüblicher Laser-Scanner verwendet werden. Das abgezogene Quarzglasrohr 33 weist im Innern einen Verschlußstopfen 12 auf, der beispielsweise aus einem aufgeblasenen, wärmebeständigen Kunststoffkörper besteht. Dieser Verschlußstopfen 12 wird durch die Halterohre 13 und 14a gehalten, die über eine automatische Schnellverschlußkupplung 15 miteinander verbunden sind. Der Verschlußstopfen 12 kann über den Preßluftanschluß 25 und die Halterohre 13 und 14a entsprechend dem Innendurchmesser des abgezogenen Quarzglasrohres 33 aufgeblasen werden. Die Halterohre 13 und 14a sind zusammen mit dem Preßluftanschluß 25 auf einem Drehtisch 16 angeordnet, der zum Befördern abgeschnittener Quarzglasrohre dient. Von dem abgezogenen Quarzglasrohr werden Quarzglasrohrstücke mittels des Schneidmessers 23, das unterhalb des Verschlußstopfens 12 angeordnet ist, abgetrennt.Nach dem Absenken des Rohres wird mittels des auf dem Drehtisch angeordneten Greifers 24 die Schnellverschlußkupplung 15 erfaßt, so daß das Halterohr l4a teleskopartig eingefahren werden kann. Auf dem Drehtisch 16 ist noch ein Halterohr 14b angeordnet. Durch Drehen des Drehtisches um 180°, wie durch Pfeil 44 angedeutet, wird einerseits das abgeschnittene Quarzglasrohrstück aus dem Bereich unterhalb der Ziehvorrichtung befördert, andererseits die Haltevorrichtung 14b an die Stelle der Haltevorrichtung 14a unterhalb der Ziehvorrichtung angeordnet, danach mit der Schnellverschlußkupplung über das Rohr 13 mit dem Verschlußstopfen 12 verbunden, so daß damit die Fixierung des Verschlußstopfens 12 wieder gesichert ist.Anschließend wird der Arm des Greifers 24 wieder eingefahren. Das abgeschnittene Quarzglasrohrstück kann dann vom Drehtisch entnommen werden.

Zur Messung des Druckes im Rohrinnern ist die Innendruckmeßvorrichtung 17 vorgesehen, deren Meßrohr 37 in den Verformungsbereich des Quarzglasrohres hineinragt. Ober die Gaszuführung 18 kann durch Zufuhr von Gas über das Zuleitungsrohr 38 der Druck im Rohrinnern im Verformungsbereich verändert werden. Zur Messung des Druckes im Kammerraum 8 dient die Kammerdruckmeßvorrichtung 19. Der Druck im Kammerraum 8 kann mittels der Gaszuleitung 20 eingestellt werden, die in die Kammer 8 mündet. Die Gaszuführung 18 und die Gaszuleitung 20 sind jeweils mit Gasflaschen 21 verbunden, die Wasserstoff oder ein wasserstoffhaltiges Gas enthalten. Entsprechend dem gewünschten Durchmesser des abgezogenen Quarzglasrohres wird mittels der Regelvorrichtung 22 die Druckdifferenz zwischen dem Druck P2 im Rohrinnern und dem Druck P1 in der Kammer auf einen konstanten Wert geregelt, und zwar vorteilhafterweise derart, daß die Schwankungen der Druckdifferenz maximal ± 1 Pa von dem eingestellten Wert betragen. Die Überwachung des Durchmessers erfolgt mittels der Meßeinrichtung 10.

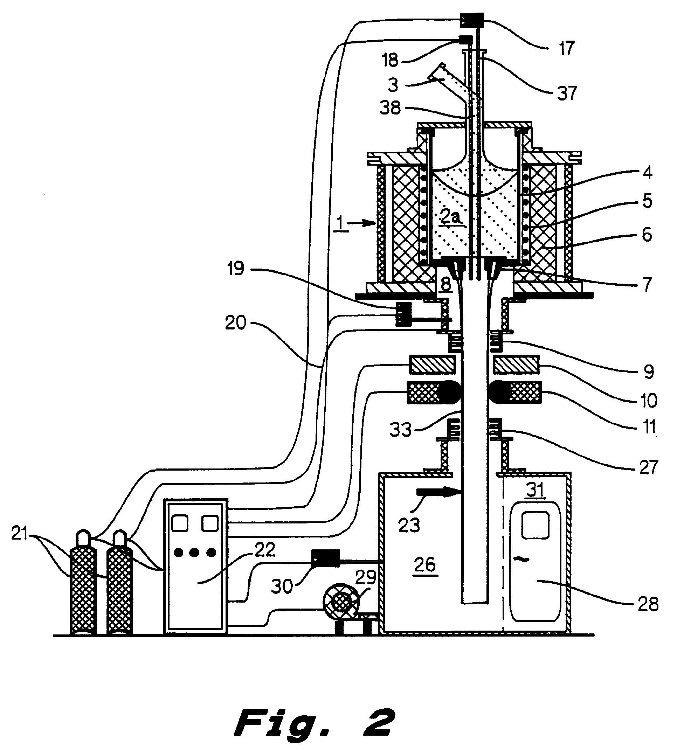

Die in der Figur 2 dargestellte Vorrichtung zur Durchführung des erfindungsgemäßen Verfahrens unterscheidet sich von der in Figur 1 dargestellten Vorrichtung im wesentlichen dadurch, daß sie statt eines festen Verschlußstopfens für das abgezogene Rohr das Prinzip eines gasförmigen Stopfens aufweist. Das abgezogene Rohr läuft, wie aus Figur 2 ersichtlich, über die Einlaufschleuse 27 in eine Schneidkammer 26 ein, in der das Schneidmesser 23 angeordnet ist. Die Schneidkammer 26 ist mit einem Gebläse 29 verbunden, mittels dessen ein vorgegebener Druck P3 innerhalb der Schneidkammer aufrechterhalten wird. Dieser Druck wird mittels der Druckmeßvorrichtung 30 gemessen, die ihrerseits mit der Regelvorrichtung 22 verbunden ist, die wiederum auf das Gebläse und damit auf den Druck P3 in der Schneidkammer 26 einwirkt. Der Druck P3 in der Schneidkammer wird dabei so geregelt, daß der Druck P2 im Rohrinneren des Verformungsbereiches auf einen vorgegebenen Wert konstant gehalten wird. Der Druck P3 in der Schneidkammer ist im vorliegenden Fall etwa 130 Pa geringer als der Druck P2 des Verformungsbereiches und mußte mit zunehmender Rohrlänge um etwa 11 Pa/m weiter gesenkt werden d.h. pro Rohrstücklänge von 2 m tritt jeweil eine Druckänderung von ca. 22 Pa in der Schneidkammer ein. Das abgeschnittene Quarzglasrohrstück gelangt dann über die Schleusenkammer 31 und die Tür 28 aus der Druckkammer 26 heraus.

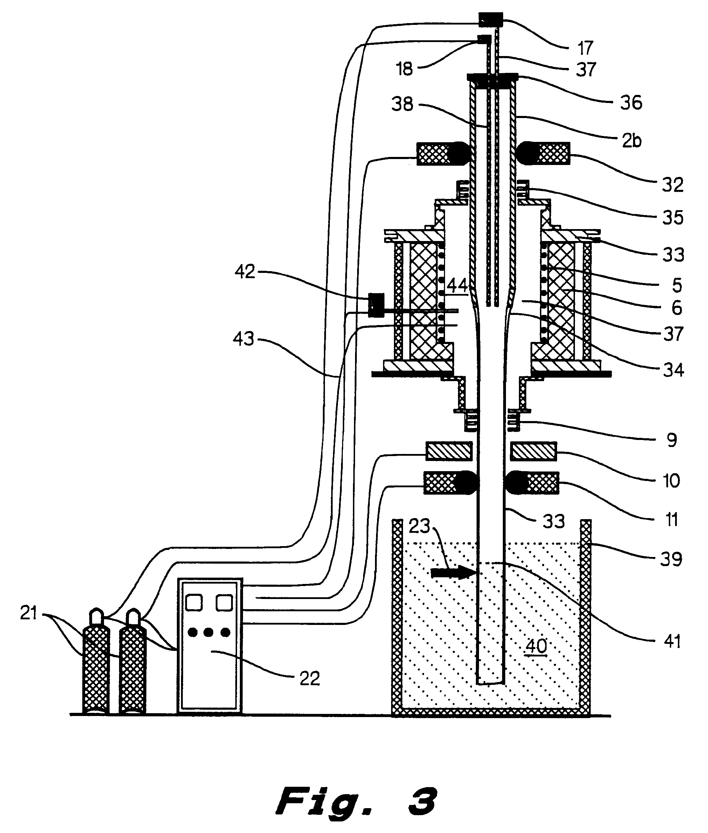

Bei der in Figur 3 dargestellten Vorrichtung zur Durchführung des erfindungsgemäßen Verfahrens wird als Ausgangsmaterial ein Hohlzylinder 2b eingesetzt. Dieser Hohlzylinder 2b wird mittels der Vorschubvorrichtung 32 über die Einlaufschleuse 35 in den Heizraum 44 kontinuierlich eingefahren und dort mittels der elektrischen Heizelemente 5 auf Erweichungstemperatur erhitzt und zu einem Rohr verformt, das über die Auslaufschleuse 9 mittels der Ziehvorrichtung 11 abgezogen wird. Auch hierbei wird der Durchmesser und die Wandstärke des abgezogenen Rohres 33 mittels Meßvorrichtung 10, wie eines Laser-Scanners, gemessen und überwacht. Das dem Verformungsbereich abgekehrte Ende des Quarzglashohlzylinders 2b ist mit einem Stopfen 36 gasdicht verschlossen. Durch diesen Stopfen ragt das Meßrohr 37 des Druckmessers 17 sowie das Zuleitungsrohr 38 der Gaszuführung 18 in das Innere des Quarzglashohlzylinders bis in den Verformungsbereich hinein. Das Ende des abgezogenen Quarzglasrohres wird in einen Behalter 39 abgezogen, der mit einer Flüssigkeit 40 gefüllt ist, beispielsweise mit Wasser. Anstelle von Wasser kann aber auch Silikonöl eingesetzt werden. Die Flüssigkeit 40 schließt als "flüssiger Stopfen" den Innenraum des abgezogenen Quarzglasrohres 33 gasdicht ab, so daß über die Gaszuführung 18 ein vorgegebener Innendruck im Innenraum des Rohres eingestellt und aufrechterhalten werden kann. In dem Heizraum 44 wird der Druck mittels der Druckmeßvorrichtung 42 überwacht; über die Heizraumgaszuführung 43 wird erforderlichenfalls Gas aus einer der Flaschen 21 zugeführt. Mittels des Schneidmessers 23 werden Quarzglasrohrstücke abgeschnitten, und zwar unterhalb des Flüssigkeitsspiegels 41 im Quarzglasrohr 33, da andernfalls Gas aus dem Innenraum des abgezogenen Rohres entweichen würde und damit der Druck im Innern des Rohres nicht mehr geregelt und kontrolliert werden kann. Die Einstellung, Regelung und Überwachung der Druckdifferenz im Verformungsbereich erfolgt in gleicher Weise wie schon im Zusammenhang mit Figur 1 beschrieben.

Wie aus den Figuren 1 bis 3 hervorgeht, ist die Ziehvorrichtung 11 für das Quarzglasrohr 33 ebenfalls mit der Regelvorrichtung 22 verbunden. Die mittels der Meßvorrichtung 10, dem Laser-Scanner, gemessenen Werte für Durchmesser und Wandstärke des Quarzglasrohres 33 werden nicht nur für die Regelung der konstant zu haltenden Druckdifferenz herangezogen, sondern auch für die Regelung des Druckmessers und der Wandstärke des abgezogenen Quarzglasrohres 33, wobei dann die Ziehgeschwindigkeit entsprechend des gewünschten Rohrdurchmessers und der Wandstärke von der Regelvorrichtung an der Ziehvorrichtung eingestellt wird.

## Patentansprüche

1. Verfahren zum Herstellen von Rohren aus glasigem Werkstoff im Vertikalzug, bei dem auf Erweichungstemperatur erhitztes Ausgangsmaterial einem ortsfesten Verformungsbereich zugeführt, verformt und nach unten abgezogen wird, wobei im Verformungsbereich eine Druckdifferenz zwischen einem höheren Druck im Rohrinneren und einem niedrigeren Druck in einer das Rohr umschließenden Kammer oder Heizraum aufrechterhalten und wobei das Rohrinnere auf der Zuführseite des Ausgangsmaterials gasdicht abgeschlossen wird, dadurch gekennzeichnet, daß zum Herstellen von Rohren aus Quarzglas oder hochkieselsäurehaltigen Gläsern das Ausgangsmaterial in einem elektrisch beheizten Ofen erhitzt und von dort direkt dem Verformungsbereich zugeführt wird, daß das abgezogene Rohrende zur Erzeugung und Aufrechterhaltung des höheren Druckes im Rohrinneren mit einem festen, gasförmigen oder flüssigen Stopfen verschlossen wird, daß dem Rohrinneren im Verformungsbereich Gas zugeführt wird und daß die Drücke im Rohrinneren und in der Kammer oder in dem Heizraum kontinuierlich gemessen und auf konstante Druckdifferenz geregelt werden.

2. Verfahren nach Anspruch 1, dadurch gekennzeichnet, daß die konstante Druckdifferenz dadurch aufrechterhalten wird, daß der Kammer oder dem Heizraum Gas zugeführt wird.

3. Verfahren nach Anspruch 1 oder 2, dadurch gekennzeichnet, daß bei Verwendung eines hohlzylindrischen Körpers als Ausgangsmaterial das dem Verformungsbereich abgekehrte Ende des Körpers gasdicht verschlossen wird.

4. Verfahren nach Anspruch 1 oder 2, dadurch gekennzeichnet, daß bei Verwendung von körnigem Ausgangsmaterial wenigstens der Kammer oder dem Heizraum ein wasserstoffhaltiges Gas zugeführt wird.

5. Verfahren nach einem oder mehreren der vorhergehenden Ansprüche, dadurch gekennzeichnet, daß die Schwankungen der Druckdifferenz zwischen Rohrinnerem und dem Druck in der Kammer oder im Heizraum auf maximal ± 1 Pa geregelt werden.

## Claims

1. A method for the production of tubes of vitreous material in vertical drawing, in which starting material, which has been heated to fusing temperature, is supplied to a fixed forming region, is formed and is drawn off downwards, in which in the forming region a pressure difference is maintained between a higher pressure in the interior of the tube and a lower pressure in a chamber or heating space surrcunding the tube and in which the interior of the tube is sealed in a gas-tight manner on the supply side of the starting material, characterised in that for the production of tubes of quartz glass or glasses containing large amounts of silicic acid,the startling material is heated in an electrically heated furnace and is supplied directly therefrom to the forming region, that the tube end which is drawn off is, closed by a fixed gaseous or liquid plug to produce and maintain the higher pressure inside the tube, that gas is supplied to the interior of the tube in the forming region and that the pressures in the interior of the tube and in the chamber or in the heating space are continuously measured and regulated to a constant pressure difference.

2. A method according to Claim 1, characterised in that the constant pressure difference is maintained in that gas is supplied to the chamber or to the heating space.

3. A method according to Claim 1 or 2, characterised in that when a hollow cylindrical body is used as starting material, the end of the body facing away from the forming region is closed so as to be gas-tight.

4. A method according to Claim 1 or 2, characterised in that when granular starting material is used, a gas containing hydrogen is supplied at least to the chamber or to the heating space.

5. A method according to one or more of the preceding claims, characterised in that the fluctuations in pressure difference between the interior of the tube and the pressure in the chamber or in the heating space are regulated to a maximum ± 1 Pa.

## Revendications

1. Dispositif de fabrication de tubes en matériau vitreux par étirage vertical, dans lequel une matière première chauffée à la température de ramollissement est amenée à une zone de formage fixe, est formée et étirée vers le bas, une différence de pression entre une pression plus élevée à l'intérieur du tube et une pression plus basse dans une chambre ou enceinte de chauffage entourant le tube étant maintenue dans la zone de formage, et l'intérieur du tube étant fermé de manière étanche aux gaz du côté de l'introduction de la matière première, caractérisé en ce que, pour fabriquer des tubes en verre de quartz ou en verres à haute teneur en silice, la matière première est chauffée dans un four à chauffage électrique et amenée de là directement à la zone de formage, en ce que l'extrémité étirée du tube est fermée par un bouchon solide, gazeux ou liquide pour l'établissement et le maintien de la pression plus élevée à l'intérieur du tube, en ce qu'un gaz est introduit à l'intérieur du tube dans la zone de formage et en ce que les pressions à l'intérieur du tube et dans la chambre ou dans l'enceinte de chauffage sont mesurées en continu et régulées à une différence de pression constante.

2. Procédé selon la revendication 1, caractérisé en ce que la différence de pression constante est maintenue par introduction d'un gaz dans la chambre ou l'enceinte de chauffage.

3. Procédé selon la revendication 1 ou 2, caractérisé en ce que, dans le cas de l'utilisation comme matière première d'un corps cylindrique creux, l'extrémité du corps qui est éloignée de la zone de formage est fermée de manière étanche aux gaz.

4. Procédé selon la revendication 1 ou 2, caractérisé en ce que, dans le cas de l'utilisation d'une matière première granuleuse, un gaz contenant de l'hydrogène est introduit au moins dans la chambre ou dans l'enceinte de chauffage.

5. Procédé selon une ou plusieurs des revendications précédentes, caractérisé en ce que les fluctuations de la différence de pression entre l'intérieur du tube et la pression qui règne dans la chambre ou dans l'enceinte de chauffage sont régulées à ± 1 Pa au maximum.
